# EUROPÄISCHE PATENTSCHRIFT

(11) **EP 1 094 721 B1**
(45) Veröffentlichungstag und Bekanntmachung des Hinweises auf die Patenterteilung: **06.05.2004**
(21) Anmeldenummer: 99934626.5
(22) Anmeldetag: 08.07.1999
(51) Int. Cl.: A23L 1/275, A61K 47/02, C09C 1/24, C09C 1/36

(54) **FARBGEBUNG MIT PERLGLANZPIGMENTEN IM LEBENSMITTEL- UND PHARMABEREICH**
COLORATION WITH PEARLY LUSTER PIGMENTS IN THE FOOD AND PHARMACEUTICAL SECTORS
COLORATION AVEC DES PIGMENTS NACRES DANS LE DOMAINE DES PRODUITS ALIMENTAIRES ET PHARMACEUTIQUES

(30) Priorität: 16.07.1998 DE 19831869
(43) Veröffentlichungstag der Anmeldung: 02.05.2001
(73) Patentinhaber: MERCK PATENT GmbH, 64293 Darmstadt (DE)
(72) Erfinder: SCHWEINFURTH, Ralf, D-69168 Wiesbach (DE); MAURER, Uta, D-64293 Darmstadt (DE)
(86) Internationale Anmeldenummer: PCT/EP1999/004792
(87) Internationale Veröffentlichungsnummer: WO 2000/003609

(56) Entgegenhaltungen:
- WO-A-93/00878
- WO-A-97/43346
- DE-A- 4 215 367
- GB-A- 2 257 433
- US-A- 3 658 552
- DATABASE WPI Week 9551 Derwent Publications Ltd., London, GB; AN 1995-325371[51] XP002121315 I. YUKIE ET. AL.: "Photochromic Composite Material" & JP 07 223816 A (SHISEIDO CO. LTD.), 22. August 1995 (1995-08-22)

## Beschreibung

Die vorliegende Erfindung betrifft die Verwendung von Titandioxid- und/oder Eisenoxidpigmenten auf Basis plättchenförmiger Substrate zur Einfärbung von Lebensmittel- und Pharmaerzeugnissen.

Neben den funktionellen Anwendungen werden Perlglanz- und Interferenzpigmente auch immer mehr zur optischen Aufwertung von Produkten, z. B. in der Kosmetik, eingesetzt, da schöne Farben und Effekte beim Betrachter und Konsumenten angenehme subjektive Empfindungen hervorrufen. Da bei der Herstellung von Perlglanzpigmenten, z. B. für die dekorative Kosmetik, strengste Anforderungen an die Reinheit und die Qualität der Pigmente gestellt werden, sollten Perlglanzpigmente auch im Nahrungsmittelbereich zur Verbesserung des Farbeffektes bzw. zur Farbgebung einsetzbar sein.

Aufgabe der vorliegenden Erfindung ist es daher die Palette der bereits bekannten Farbtöne bei der Einfärbung von Lebensmittel- und Pharmaerzeugnissen mit Hilfe von Perlglanz- bzw. Interferenzpigmenten zu erweitern, wodurch die Produkte eine zusätzliche sinnlich wahrnehmbare Aufwertung erfahren. Die optische Aufwertung ist insbesondere für Pharmaprodukte wertvoll, da eine deutlichere Differenzierung verschieden gefärbter Tabletten, Dragees, etc., ermöglicht wird.

Überraschenderweise wurde nun gefunden, daß zur optischen Aufwertung von Lebensmittel- und Pharmaerzeugnissen plättchenförmige Substrate beschichtet mit Titandioxid und/oder Eisenoxid hervorragend geeignet sind. Unter Eisenoxidpigment sind sowohl mit Fe₂O₃ als auch mit Fe₃O₄ beschichtete plättchenförmige Substrate zu verstehen. Insbesondere die Kombination von TiO₂- und/oder Fe₃O₄-Pigmenten mit natürlichen bzw. naturidentischen Farbstoffen, Farbpigmenten oder färbenden Frucht- und Pflanzenextrakten, verleihen dem Lebensmittelerzeugnis einen interessanten neuen Farbton. Mit der Farbgebung von Lebensmittelerzeugnissen können gleichzeitig Wünsche nach neuen Varianten und Nuancen der Farbtöne aufgrund der neuen Trends in der Mode berücksichtigt werden.

Gegenstand der Erfindung ist somit die Verwendung von Titandioxid- und/oder Eisenoxid-Pigmenten auf Basis plättchenförmiger Substrate zur Einfärbung von Lebensmittel- und Pharmaerzeugnissen.

Die eingefärbten Lebensmittel und pharmazeutischen Erzeugnisse zeichnen sich durch einen neuartigen Farbeffekt aus, der auf der Lichtbrechung der Perlglanzpigmente beruht und beim Betrachter und Konsumenten angenehme subjektive Empfindungen hervorruft. Dieser optische Effekt ist mit den zur Zeit im Lebensmittelbereich zugelassenen Färbemitteln nicht möglich. Im Gegensatz zu Farbpigmenten, die im Lebensmittelbereich zugelassen sind, z. B. Pflanzenkohle E153, lassen sich die Titandioxid- und Eisenoxidpigmente auf Basis plättchenförmiger Substrate sehr leicht in das zu pigmentierende Medium dispergieren. Weiterhin zeichnen sich die so eingefärbten Erzeugnisse durch einen erhöhten Licht- und Feuchtigkeitsschutz aus. Insbesondere Vitaminpräparate sind länger haltbar. Bei der Einfärbung von Tabletten wurde in vielen Fällen eine verzögerte Abgabe von Wirkstoffen festgestellt.

Es zeigt sich, daß den Lebensmitteln bzw. Pharmaerzeugnissen bereits mit sehr geringen Mengen an Titandioxid- und/oder Eisenoxid-Pigmenten neue interessante Farbtöne und gleichzeitig neue Eigenschaften verliehen werden können. Hervorragende Ergebnisse erzielt man schon bei der Einfärbung des Produkts mit 0,005 bis 15,0 Gew.%, vorzugsweise 0,01 bis 6,0 Gew.%, insbesondere 0,1 bis 2,0 Gew.%, an Perlglanzpigment bezogen auf das Produkt.

In dem Fall, daß dem Lebensmittel- oder Pharmaerzeugnis das Pigment bei der Herstellung direkt beigemischt wird, beträgt die Einsatzmenge an Pigment vorzugsweise 0,005 bis 4 Gew.%. Bei der Oberflächenbehandlung von Lebensmitteln oder Tabletten liegt der Einsatzbereich bei 0,02 bis 15,0 Gew.%, vorzugsweise 0,5 bis 6,0 Gew.%, bezogen auf die Farb- bzw. Überzugslösung.

Bei den verwendeten schwarzen Eisenoxidpigmenten handelt es sich um mit Magnetit beschichtete natürliche oder synthetische Glimmerplättchen, Talkum, Kaolin, SiO₂- oder TiO₂-Plättchen. Besonders bevorzugt werden feinteilige Eisenoxidpigmente zur Einfärbung der Erzeugnisse eingesetzt, vorzugsweise mit einer Teilchengröße im Bereich von 0,01 bis 200 µm, insbesondere von 0,1 bis 100 µm. Derartige schwarze Perlglanzpigmente sind z.B. aus den Patenten und Patentanmeldungen P 23 13 331, P 36 17 430 und JP 90-246314 bekannt sind. Diese Pigmente sind beispielsweise kommerziell erhältlich unter der Marke Candurin® Black Fine von der Fa. Merck KGaA, Darmstadt.

TiO₂- und Fe₂O₃-Pigmente basierend auf plättchenförmigen Substraten, wie z. B. natürlicher und synthetischer Glimmer, Glas- TiO₂-, SiO₂-, Al₂O₃-Plättchen sind beispielsweise bekannt aus den deutschen Patenten und Patentanmeldungen DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 53 017, WO 93/08237, DE 196 18 564 und EP 0 763 573. Dabei werden die Substrate mit ein, zwei, drei, vier, fünf oder mehr Metalloxidschichten belegt. Insbesondere bevorzugt sind Pigmente, die ein oder zwei Schichten aus TiO₂ und/oder Fe₂O₃ enthalten. Die Partikelgrößen der Pigmente sind vorzugsweise ≤ 200 µm, insbesondere ≤ 100 µm.

Durch die Zumischung von für den Lebensmittelbereich zugelassenen Perlglanz- und Interferenzpigmenten, und/oder natürlichen/-naturidentischen Farbstoffen, Farbpigmenten oder färbenden Frucht- und Pflanzenextrakten kann der Farbeffekt der Titandioxid- und/oder Eisenoxid-Pigmente im Erzeugnis verstärkt und gleichzeitig können neuartige Farbeffekte erzielt werden.

Insbesondere die Einfärbung von Lebensmittelerzeugnissen mit einem Pigmentgemisch bestehend aus Fe₃O₄-Pigmenten mit Perlglanz- und/oder Interferenzpigmenten auf Basis von Glimmer-, Al₂O₃-, SiO₂- oder TiO₂-Plättchen, die mit TiO₂ und/oder Fe₂O₃ beschichtet sind, verleiht den Erzeugnissen interessante Farbeffekte. Ganz besonders bevorzugt sind Pigmentgemische enthaltend ein Fe₃O₄-Pigment auf Basis von Glimmer.

Durch die Kombination von Fe₃O₄-Pigmenten mit anderen Perlglanzpigmenten wie Gold-, Silber- oder Interferenzpigmenten wird der jeweilige Farbeffekt der Pigmente verstärkt. Dieser Synergismus erweitert die Farbmöglichkeiten der zu pigmentierenden Erzeugnisse erheblich, ohne daß andere natürliche oder naturidentische Farbstoffe zusätzlich eingesetzt werden müssen.

Die für den Lebensmittelbereich zugelassenen Perlglanz- und Interferenzpigmente sind im Handel erhältlich beispielsweise unter der Marke Candurin® von der Fa. Merck KGaA.

Die Gesamtkonzentration aller Pigmente im zu pigmentierenden Erzeugnis sollte ebenfalls 12 Gew.% bezogen auf das Erzeugnis nicht übersteigen. Sie ist in der Regel abhängig vom konkreten Anwendungsfall. Das Mischungsverhältnis der TiO₂- oder Fe₃O₄-Pigmente mit einer weiteren Pigmentkomponente hängt vom gewünschten Effekt ab und beträgt in der Regel 20:1 bis 1:20, vorzugsweise 5:1, insbesondere 1:1. Bei der Pigmentkomponente kann es sich um ein oder mehrere Perlglanz- bzw. Interferenzpigmente handeln. Insbesondere bevorzugt sind TiO₂-Glimmerpigmente, Fe₂O₃-Glimmerpigmente und mit TiO₂ und Fe₂O₃ beschichtete Glimmerpigmente. Weiterhin bevorzugt sind mit TiO₂ und/oder Fe₂O₃ beschichtete oder unbeschichtete SiO₂- oder TiO₂-Plättchen.

Der Farbeffekt in Lebensmittelerzeugnissen und Pharmaprodukten wird insbesondere bei der Kombination von schwarzen Eisenoxidpigmenten mit Gold-, Silberpigmenten sowie Interferenzpigmenten auf Basis von mit TiO₂ bzw. TiO₂/Fe₂O₃ beschichteten Glimmerpigmenten verbessert. Der Anteil von Fe₃O₄-Pigmenten im Produkt sollte bei dieser bevorzugten Ausführungsform vorzugsweise bei 0,005 - 2 Gew.% liegen.

Neben den Perlglanzpigmenten und/oder Interferenzpigmenten können als weitere farbgebende Komponente den Titandioxid- und/oder Eisenoxid-Pigmenten alle dem Fachmann bekannten natürliche oder naturidentische Farbstoffe beigemischt werden. Insbesondere sind hier zu erwähnen E 101, E 104, E 110, E 124, E 131, E 132, E 140, E 141, E 151, E 160a.

Weiterhin können auch andere Farbpigmente den plättchenförmigen Perlglanzpigmenten beigemischt werden, wie z.B. E 171, E 172, E 153.

Der Anteil an Farbstoffen bezogen auf das Erzeugnis liegt im Bereich von 0,5 bis 25 Gew.%. Als Farbstoff können ebenfalls Frucht- und Pflanzenextrakte eingesetzt werden, wie z.B. Möhrensaft, Rote Beete-Saft, Holundersaft, Hibiscussaft, Paprikaextrakt, Aroniaextrakt.

Die Einfärbung der Pharma- und Lebensmittelerzeugnisse erfolgt, indem das Titandioxid- und/oder Eisenoxid-Pigment allein oder in Kombination mit weiteren Pigmenten oder Färbemitteln in den gewünschten Mengenverhältnissen, gleichzeitig oder nacheinander, während oder nach ihrer Herstellung dem einzufärbenden Erzeugnis zugegeben wird. Ein aufwendiges Mahlen und Dispergieren der Pigmente ist nicht erforderlich.

Als zur Einfärbung geeignete Produkte sind insbesondere zu nennen Überzüge auf allen Arten von Lebensmitteln, insbesondere pigmentierte Zucker- und Schellacküberzüge (alkoholische und wäßrige), Überzüge mit Ölen und Wachsen, mit Gummi Arabicum und mit Cellulosearten (z.B. HPMC = Hydroxypropylmethylcellulose), die Einarbeitung bzw. der Auftrag auf Zuckerwaren, Kuchendekorationen, Komprimate, Dragees, Kaugummis, Gummiwaren, Fondanterzeugnisse, Marzipanerzeugnisse, Füllmassen, Kakao- und Fettglasuren, Schokolade und schokoladehaltigen Produkten, Speiseeis, Cerealien, Snackprodukte, Überzugsmassen, Tortenspiegel, Zuckerstreusel, Nonpareilles, Gelee- und Gelatinewaren, Bonbons, Lakritze, Zuckerguß, Zuckerwatte, Fett-, Zucker- und Crememassen, Puddings, Desserts, Tortenguß, Kaltschalen, Getränke mit stabilisierenden Additiven wie z.B. Carboxymethylcellulose, gesäuerte und ungesäuerte Milchprodukte wie z.B. Quark, Joghurt, Käse, Käserinden, Wursthüllen, etc.

Ein weiteres großes Einsatzgebiet liegt im Pharma- und OTC-Bereich zur Einfärbung von Tabletten, Gelatinekapseln, Dragees, Salben, Hustensaft, etc. In Kombination mit üblichen Coatings wie Polymethacrylaten und Cellulosearten, z.B. HPMC, können die Pigmente vielfältig zur Einfärbung eingesetzt werden.

Bei dragierten bzw. gecoateten Lebensmittel- und Pharmaerzeugnissen ist die Kombination der Titandioxid- und Eisenoxidpigmente mit Aromastoffen (Pulver- bzw. Flüssigaromen) und/oder mit Süßstoffen, wie z.B. Aspartam, möglich um den optischen Effekt auch geschmacklich zu betonen.

Gegenstand der Erfindung sind somit alle Formulierungen aus dem Nahrungsmittel- und Pharmabereich enthaltend das Titandioxid- und/oder Eisenoxid-Pigment allein oder in Kombination mit weiteren Pigmenten/Pigmentgemischen oder Farbstoffen (natürliche bzw. naturidentische) als Färbemittel.

Die nachfolgenden Beispiele sollen die Erfindung erläutern ohne sie jedoch zu begrenzen.

### Beispiele

### Beispiel 1 - Herstellungsanleitungen von Hartkaramellen

### 1. Rezepturbeispiel mit Isomalt

| | | Bezugsquellen: |
|---|---|---|
| Isomalt Merck Patent | 75 % | Fa. Palatinit GmbH, Mannheim |
| GmbH | | |
| Wasser | 24,005 % | |
| Aspartam | 0,0075 % | Fa. Worlée, Hamburg |
| Acesulfam K | 0,0075 % | Fa. Nutrinova, Frankfurt a.M. |
| Candurin® Silver Sheen*¹ | 0,144 % (0,2 % bezogen auf die Gießmasse) | Fa. Merck KGaA, Darmstadt |
| Candurin® Black Fine *² | 0,036 % (0,05 % bezogen auf die Gießmasse) | Fa. Merck KGaA, Darmstadt |
| Zitronensäure | 0,5 % | Fa. Merck KGaA, Darmstadt |
| Aroma | 0,3 % (Pfirsich 9/030307) | Fa. Dragoco, Holzminden |

| | | |
|---|---|---|
| *¹ (TiO₂-Glimmerpigment der Teilchengröße 5-25 µm) | | |
| *² (Fe₃O₄-Glimmerpigment der Teilchengröße < 15 µm) | | |

Wasser wird mit Isomalt M auf 165 °C erhitzt und danach läßt man die Lösung auf 145 °C abkühlen. Nach Zugabe von Zitronensäure, Aspartam, Acesulfam K werden die Pigmente Candurin® Black Fine und Candurin® Silver Sheen und das Aroma untergerührt. Zuletzt wird die heiße Masse mit einem Gießtrichter in gefettete Formen gegossen. Die Hartkaramellen läßt man 1 Stunde abkühlen.

Weitere Ausführungsformen:
- Häufig empfiehlt es sich die Inhaltsstoffe mit einem Teil des Wassers vorzulösen um Klumpenbildung zu vermeiden.
- Die Pigmente Candurin® Silver Sheen und Candurin® Black Fine können auch direkt mit dem Wasser und Isomalt erhitzt werden. Ein Farbverlust tritt nicht ein.

### 2. Rezepturbeispiel mit Isomalt

| | | Bezugsquellen: |
|---|---|---|
| Isomalt Merck Patent | 75 % | Fa. Palatinit GmbH, Mannheim |
| GmbH | | |
| Wasser | 24,041 % | |
| Aspartam | 0,0075 % | Fa. Worlée, Hamburg |
| Acesulfam K | 0,0075 % | Fa. Nutrinova, Frankfurt a.M. |
| Candurin® Honeygold*³ | 0,144 % (0,2 % bezogen auf die Gießmasse) | Fa. Merck KGaA, Darmstadt |
| Zitronensäure | 0,5 % | Fa. Merck KGaA, Darmstadt |
| Aroma | 0,3 % (Pfirsich 9/030307) | Fa. Dragoco, Holzminden |

| | | |
|---|---|---|
| *³ (TiO₂/Fe₂O₃-Glimmerpigment der Teilchengröße 5-25 µm) | | |

Wasser wird mit Isomalt M auf 165°C erhitzt und danach läßt man die Lösung auf 145°C abkühlen. Nach Zugabe von Zitronensäure, Aspartam, Acesulfam K werden Candurin® Honeygold und das Aroma untergerührt. Zuletzt wird die heiße Masse mit einem Gießtrichter in gefettete Formen gegossen. Die Hartkaramellen läßt man 1 Stunde abkühlen.

Weitere Ausführungsformen:
- Häufig empfiehlt es sich die Inhaltsstoffe mit einem Teil des Wassers vorzulösen um Klumpenbildung zu vermeiden.
- Das Pigment Candurin® Honeygold kann auch direkt mit dem Wasser und Isomalt erhitzt werden.

### 3. Rezepturbeispiel mit Zucker

| | | Bezugsquellen: |
|---|---|---|
| Zucker | 41 % | Fa. Südzucker |
| Wasser | 17,077 % | |
| Glucosesirup | 41 % C* Sweet | Fa. Cerestar, Krefeld |
| Candurin® Silver Sheen*¹ | 0,082 % (0,1 % bezogen auf die Gießmasse) | Fa. Merck KGaA, Darmstadt |
| Candurin® Black Fine*² | 0,041 % (0,05 % bezogen auf die Gießmasse) | Fa. Merck KGaA, Darmstadt |
| E 104 1:100 verd. | 0,4 % Sikovit | Fa. BASF, Ludwigshafen |
| Aroma | 0,4 % (Banane 9/030388) | Fa. Dragaco, Holzminden |

| | | |
|---|---|---|
| *¹ (TiO₂-Glimmerpigment der Teilchengröße 5-25 µm) | | |
| *² (Fe₃O₄-Glimmerpigment der Teilchengröße < 15 µm) | | |

Der Zucker wird mit dem Wasser auf 100 °C erhitzt und danach mit Glucosesirup versetzt. Die Lösung wird anschließend auf 145 °C erhitzt. Nach Zugabe von Candurin® Silver Sheen, Candurin® Black Fine, Farblösung und dem Aroma wird die Karamellösung mit einem Gießtrichter in gefettete Formen gegossen. Zuletzt läßt man zwei Stunden abkühlen. Die Candurin® Pigmente können sowohl mit dem Zucker vermischt werden als auch mit dem Glukosesirup vermischt zugegeben werden. Diese Variante enthält keine Säure, da hierdurch die Karamelisation zu stark würde.

### 4. Rezepturbeispiel mit Zucker

| | | Bezugsquellen: |
|---|---|---|
| Zucker | 41 % | Fa. Südzucker |
| Wasser | 17,118 % | |
| Glucosesirup | 41 % C* Sweet | Fa. Cerestar, Krefeld |
| Candurin® Wine Red*⁴ | 0,082 % (0,1 % bezogen auf die Gießmasse) | Fa. Merck KGaA, Darmstadt |
| E 104 1:100 verd. | 0,4 % Sikovit | Fa. BASF, Ludwigshafen |
| Aroma | 0,4 % (Banane 9/030388) | Fa. Dragaco, Holzminden |

| | | |
|---|---|---|
| *⁴ (Fe₂O₃-Glimmerpigment der Teilchengröße 10-60 µm) | | |

Der Zucker wird mit dem Wasser auf 100 °C erhitzt und danach mit Glucosesirup versetzt. Die Lösung wird anschließend auf 145 °C erhitzt.

Nach Zugabe von Candurin® Wine Red, Farblösung und dem Aroma wird die Karamellösung mit einem Gießtrichter in gefettete Formen gegossen. Zuletzt läßt man zwei Stunden abkühlen. Das Candurin®-Pigment kann sowohl mit dem Zucker vermischt werden als auch mit dem Glukosesirup vermischt zugegeben werden. Diese Variante enthält keine Säure, da hierdurch die Karamelisation zu stark würde.

### Beispiel 2 - Herstellung von Gelatineartikeln

### 1. Rezepturbeispiel

| | | Bezugsquellen: |
|---|---|---|
| Wasser | 10,48 % | |
| Zucker | 31,45 % | Fa. Südzucker |
| Glukosesirup | 31,45 % C*Sweet | Fa. Cerestar, Krefeld |
| Candurin® Wine Red | 0,38 % (0,4% bezogen auf die Gießmasse) | Fa. Merck KGaA, Darmstadt |
| Zitronensäure 1:1 verd. | 2,51 % | Fa. Merck KGaA, Darmstadt |
| Gelatine | 7,86 % 260 Bloom | Fa. DGF, Eberbach |
| Wasser | 15,748 % | |
| Aroma | 0,122 % (schwarze Johannisbeere 9/695750) | Fa. Dragoco, Holzminden |

Zunächst wird die Gelatine mit der doppelten Menge an Wasser bei 60 °C eingeweicht. Zucker und Wasser werden auf 100 °C erhitzt, dann wird der Glucosesirup zugegeben. Man erhitzt weiter auf 120 °C und läßt dann auf ca. 85 °C abkühlen. Das Candurin®-Pigment, die Zitronensäure, das Aroma und die Gelatinelösung werden untergerührt, und das entlüftete Gelatinegemisch wird mit dem Gießtrichter in gefettete Formen abgefüllt. Das Produkt läßt man ca. 16 Stunden abkühlen.

Weitere Ausführungsformen:
- Das Candurin®-Pigment kann hierbei wieder direkt schon mit dem Zucker vermischt werden oder mit dem Glukosesirup eingebracht werden.
- Anstelle des Gießens in Formen kann auch die traditionelle Technik mit Negativformen in Formpuder zur Herstellung von Gelatineartikeln hierbei verwendet werden.

### 2. Rezepturbeispiel

| | | Bezugsquellen: |
|---|---|---|
| Wasser | 10,508 % | |
| Zucker | 31,45 % | Fa. Südzucker |
| Glukosesirup | 31,45 % C*Sweet | Fa. Cerestar, Krefeld |
| Candurin® Blueberry Sugar*⁵ | 0,38 % (0,4% bezogen auf die Gießmasse) | Fa. Merck KGaA, Darmstadt |
| E 153 (Pflanzenkohle / Carbon medicinales) | 0,038 % (0,04 % bezogen auf die Gießmasse) | Fa. Dr. Marcus |
| Zitronensäure 1:1 verd. | 2,51 % | Fa. Merck KGaA, Darmstadt |
| Gelatine | 7,86 % 260 Bloom | Fa. DGF, Eberbach |
| Wasser | 15,682 % | |
| Aroma | 0,122 % (schwarze Johannisbeere 9/695750) | Fa. Dragoco, Holzminden |

| | | |
|---|---|---|
| *⁵ (TiO₂-Glimmerpigment der Teilchengröße 10-60 µm) | | |

Zunächst wird die Gelatine mit der gleichen Menge an Wasser bei 60 °C eingeweicht. Zucker und Wasser werden auf 100 °C erhitzt, dann wird der Glucosesirup zugegeben. Man erhitzt weiter auf 120 °C und läßt dann auf ca. 85 °C abkühlen. Das Candurin®-Pigment, die Zitronensäure, das Aroma und die Gelatinelösung werden untergerührt und das entlüftete Gelatinegemisch wird mit dem Gießtrichter in gefettete Formen abgefüllt. Das Produkt läßt man ca. 16 Stunden abkühlen.

Weitere Ausführungsformen:
- Das Candurin®-Pigment kann hierbei wieder direkt schon mit dem Zucker vermischt werden oder mit dem Glukosesirup eingebracht werden.
- Anstelle des Gießens in Formen kann auch die traditionelle Technik mit Negativformen in Formpuder zur Herstellung von Gelatineartikeln hierbei verwendet werden.

### Beispiel 3 - Dragees

### a) Zu färbende Kerne: weiße Dragee-Einlagen (hartzuckerdragierte Lackritzstäbchen)

| Lösung zum Coaten der Dragees: | | |
|---|---|---|
| | | Bezugsquellen: |
| - alkoholische Schellacklösung | 95,62 % | Fa. Wolff & Olsen |
| - Candurin® Silver Lustre*¹ | 4,00 % | Fa. Merck KGaA, Darmstadt |
| - Candurin® Black Fine*² | 0,38 % | Fa. Merck KGaA, Darmstadt |

| | | |
|---|---|---|
| *¹ (TiO₂-Glimmerpigment der Teilchengröße 10-60 µm) | | |
| *² (Fe₃O₄-Glimmerpigment der Teilchengröße < 15 µm) | | |

Die Candurin®-Pigmente werden im Schellack gleichmäßig verteilt und auf die im Drageekessel langsam rotierenden Dragees gesprüht. Die Dragees werden kontinuierlich mit Kaltluft getrocknet. Das Sprühen wird solange fortgesetzt bis die gewünschte Farbdeckung erzielt ist. Zuletzt werden die Kerne aus dem Kessel entnommen und ca. 12 Stunden auf Horden getrocknet.

### b) Zu färbende Kerne: schwarze Dragee-Einlagen (Kaugummikugeln)

| Lösung zum Coaten der Dragees: | | |
|---|---|---|
| | | Bezugsquellen: |
| - alkoholische Schellacklösung | 95 % | Fa. Kaul GmbH |
| - Candurin® Caramel* | 5 % | Fa. Merck KGaA, Darmstadt |

| | | |
|---|---|---|
| * (Fe₂O₃-Glimmerpigmente der Teilchengröße 10-60 µm) | | |

Das Candurin®-Pigment wird im Schellack gleichmäßig verteilt und auf die im Drageekessel langsam rotierenden Dragees gesprüht. Das Sprühen wird solange fortgesetzt bis die gewünschte Farbdeckung erzielt ist. Es wird kontinuierlich mit Kaltluft getrocknet um ein Aneinanderkleben der Kerne zu verhindern. Zuletzt werden die Kerne aus dem Kessel entnommen und ca. 12 Stunden auf Horden getrocknet.

### c) -Coating von Lakritzstiften mit weißer Hartzuckerdecke

Zu färbende Kerne: Lakritzstifte mit weißer Hartzuckerdecke

| Lösung zum Coaten der Dragees: | | |
|---|---|---|
| | | Bezugsquellen: |
| - alkohol. Schellacklösung: | 95,75% Capol 425 | Fa. Kaul GmbH |
| - Candurin® Buttergold *¹ | 4 % | Fa. Merck KGaA, Darmstadt |
| - Candurin® Black Fine | 0.25 % | Fa. Merck KGaA, Darmstadt |

| | | |
|---|---|---|
| *¹ (TiO₂/Fe₂O₃-Glimmerpigment der Teilchengröße 10-60 µm) | | |

Das Coating der Kerne erfolgt analog Beispiel 3 a).

### d) - Dragierung von Wiener Nüssen (weiß, Hartzuckerdecke mit Haselnußkern)

| Lösung zum Coaten der Dragees: | | |
|---|---|---|
| | | Bezugsquellen: |
| - alkohol. Schellacklösung: | 96,0% | Fa. Wolff & Olsen |
| - Candurin® Silver Lustre* | 4 % | Fa. Merck KGaA, Darmstadt |

| | | |
|---|---|---|
| * (TiO₂-Glimmerpigment der Teilchengröße 10-60 µm) | | |

Das Candurin®-Pigment wird gleichmäßig in der Schellacklösung verteilt. Der Auftrag erfolgt analog Beispiel 3 a).

### e) - Ausgangsware: Weiße Schokolinsen

Der Sprühauftrag erfolgt mittels einer wäßrigen Candurin®/HPMC-Lösung.
- Die Candurin®-Pigmente werden in Wasser eingerührt. Anschließend fügt man gegebenenfalls zusätzliche Farbstoffe, Aromen oder Süßstoffe hinzu. Schließlich streut man den Filmbildner (HPMC) in die Suspension ein. Durch die ansteigende Viskosität bedingt muß auch die Rührergeschwindigkeit dementsprechend erhöht werden. Nach ca. 40-60 Minuten ist die HPMC vollständig gelöst und die Lösung kann nun auf die Dragees aufgesprüht werden.
- Der Sprühauftrag kann im Dragierkessel bzw. in gängigen Coatingsystemen erfolgen, wobei eine entsprechend angepaßte kontinuierliche Trocknungsluft (Temperaturen/Volumen) zu beachten ist.
- Sobald der gewünschte Farbeffekt erreicht ist, werden die Dragees entladen. Ein Trocknen auf Horden entfällt.

| Sprühlösung: | | |
|---|---|---|
| Sepifilm Lp10 | 6,0 % | Fa. Seppic |
| Candurin® Paprika* | 5,0 % | Fa. Merck KGaA, Darmstadt |
| Aroma | 0,5 % (Vanille 9/024233) | Fa. Dragoco, Holzminden |
| Wasser | 88,5 % | |

| | | |
|---|---|---|
| * Fe₂O₃-Glimmerpigment der Teilchengröße 10-60 µm) | | |

### f) Ausgangsware: Weiße zuckerdragierte Mandeln

Herstellung der Sprühlösung und Auftrag erfolgt wie bei e)

| Sprühlösung: | | |
|---|---|---|
| Sepifilm Lp10 | 5,0 % | Fa. Seppic |
| Candurin® Silver Lustre* | 4,0 % | Fa. Merck KGaA, Darmstadt |
| Sepisperse M5062 | 1,0 % | Fa. Seppic |
| Wasser | 90,0 % | |

| | | |
|---|---|---|
| * (TrO₂-Glimmerpigment der Teilchengröße 10-60 µm) | | |

### g) Ausgangsware: Weiße zuckerdragierte Mandeln

Herstellung der Sprühlösung und Auftrag erfolgt wie bei e)

| Sprühlösung: | | |
|---|---|---|
| Sepifilm Lp10 | 6,0 % | Fa. Seppic |
| Candurin® Silver Lustre* | 4,0 % | Fa. Merck KGaA, Darmstadt |
| E153 | 0,2 % | Fa. Dr. Marcus |
| Wasser | 89,8 % | |

| | | |
|---|---|---|
| * (TiO₂-Glimmerpigment der Teilchengröße 10-60 µm) | | |

### h) Ausgangsware: Rote zuckerdragierte Mandeln

Der Sprühauftrag erfolgt mittels einer wäßrigen Candurin®/Gummi Arabicum-Lösung.

Die Candurin®-Pigmente werden in die Gummi Arabicum-Lösung eingerührt und anschließend auf die im Dragierkessel rotierenden Dragees gesprüht. Hierbei sollte kontinuierlich mit Kaltluft getrocknet werden. Bei Erreichen des gewünschten Farbeffektes wird der Sprühvorgang abgebrochen. Anschließend können die gefärbten Dragees noch mit einem Schellackfilm überzogen werden um ein Zusammenkleben zu vermeiden.

| Sprühlösung: | | |
|---|---|---|
| Gummi Arabicum Lösung | 82,0 % | Fa. Kaul |
| Candurin® Wine Red* | 8,0 % | Fa. Merck KGaA, Darmstadt |
| Wasser | 10,0 % | |

| | | |
|---|---|---|
| * (Fe₂O₃-Glimmerpigment der Teilchengröße 10-60 µm) | | |

### Beispiel 4 - Wackelpudding

| | | Bezugsquellen: |
|---|---|---|
| Ca-Laktat | 0,05 % | Fa. Merck KGaA |
| Genugel LC4N | 0,6 % | Fa. Hercules |
| Tetra-Na-Phosphat | 0,15 % | Fa. Merck KGaA |
| Zitronensäure krist. | 0,38 % | Fa. Merck KGaA |
| Gellan | 0,06 % | Fa. Kelco |
| Tri-K-Phosphat | 0,05 % | Fa. Merck KGaA |
| Saccharose | 15 % | Fa. Südzucker |
| Candurin® Silver Sparkle *¹ | 0,025 % | Fa. Merck KGaA |
| Aroma und Farbe nach Wunsch Wasser | 83,685 % | |

| | | |
|---|---|---|
| *¹ (TiO₂-Glimmerpigment der Teilchengröße 20-150 µm) | | |

Unter Rühren werden alle Komponenten auf 95 °C erhitzt und 3-5 Minuten bei dieser Temperatur gehalten. Anschließend läßt man unter leichtem Rühren auf 40-45 °C abkühlen. Danach füllt man den Wackelpudding in Formen und stellt ihn gegebenenfalls kühl.

### Pharmazeutische Anwendungen:

### Beispiel 5

### a) Einwaage 1 kg weiße Tabletten d=8mm, G=200mg

| Lösung für das Filmcoating: | | |
|---|---|---|
| 6 % | Sepifilm Lp10 | Fa. Seppic |
| | (Gemisch aus Hydroxypropylmethylcellulose, Stearinsäure und mikrokristalliner Cellulose | |
| 5 % | Candurin® Caramel* | Fa. Merck KGaA, Darmstadt |
| 89 % | Wasser | |

| | | |
|---|---|---|
| * (Fe₂O₃-Glimmerpigment der Teilchengröße 10-60 µm) | | |

Gesamtauftragsmenge: 200 g
Dies entspricht 1,2 mg Polymer/cm² Tablettenoberfläche

### b) Einwaage 1 kg weiße Tabletten d=8 mm, G=200 mg

| Lösung für das Filmcoating (100 g): | | |
|---|---|---|
| 6 % | Sepifilm Lp10 | Fa. Seppic |
| 4 % | Candurin® Silver Lustre* | Fa. Merck KGaA |
| 1 % | Sepisperse M5062 | Fa. Seppic |
| | (Farbanteigung: TiO₂, natürliche oder naturidentische Farbstoffe, Stabilisator) | |
| 89 % | Wasser | |

| | | |
|---|---|---|
| * (TiO₂-Glimmerpigment der Teilchengröße 10-60 µm) | | |

Gesamtauftragsmenge: 200 g
Dies entspricht 1,2 mg Polymer/cm² Tablettenoberfläche.

### Herstellung der Film-Coating-Lösung:

- Die Candurin®-Pigmente werden in Wasser eingerührt. Anschließend fügt man gegebenenfalls zusätzliche Farbstoffe hinzu. Schließlich streut man den Filmbildner (HPMC) in die Suspension ein. Durch die ansteigende Viskosität bedingt, muß auch die Rührgeschwindigkeit dementsprechend erhöht werden. Nach ca. 40-60 Minuten ist die HPMC vollständig gelöst und die Lösung kann nun auf die Tabletten aufgesprüht werden.
- Der Sprühauftrag erfolgt mittels gängigem Standard-Coating-Verfahren.

### Süßwaren

### Beispiel 6:

### a) Lakritzwaren:

### Rohware: Extrudierte Lakritzwaren

Die geölten Lakritzwaren werden in einem Dragierkessel mit einer Candurin®/Schellacklösung besprüht. Gleichzeitig erfolgt die Trocknung mit Kaltluft. Sobald der gewünschte Farbeffekt erreicht ist, wird der Auftrag gestoppt und die gefärbten Lakritzwaren aus dem Kessel entladen.

| Sprühlösung: | | |
|---|---|---|
| alkoholische Schellacklösung | 97 % | Fa. Kaul |
| Candurin® Kiwi Sugar* | 3 % | Fa. Merck KGaA, Darmstadt |

| | | |
|---|---|---|
| *(TiO₂-Glimmerpigment der Teilchengröße 10-60 µm) | | |

### b) Menthol-Lutschpastillen

### Rohware: Menthol-Lutschpastillen

Im Dragierkessel wird eine Candurin®/Schellacklösung (wäßrig) auf die rotierenden Lutschpastillen aufgesprüht. Es wird hierbei kontinuierlich mit Warmluft getrocknet. Sobald der gewünschte Farbeffekt erreicht ist, wird der Auftrag gestoppt und die gefärbten Lutschpastillen aus dem Kessel geladen.

| Sprühlösung: | | |
|---|---|---|
| wäßrige Schellacklösung | 96 % | Fa. Warner Jenkinson |
| Candurin® Silver Lustre* | 4 % | Fa. Merck KGaA, Darmstadt |

| | | |
|---|---|---|
| * (TiO₂-Glimmerpigment der Teilchengröße 10-60 µm) | | |

### c) Marzipan-Rosen (Kuchenverzierung)

### Rohware: Marzipan-Rosen, rot

Die Kuchenverzierungen werden mit einer Candurin®/Schellacklösung besprüht bis der gewünschte Farbauftrag erreicht ist. Eine nachträgliche Trocknung mit Kaltluft ist möglich.

| Sprühlösung: | | |
|---|---|---|
| alkoholische Schellacklösung | 97 % | Fa. Wolff & Olsen |
| Candurin® Blueberry Sugar* | 3 % | Fa. Merck KGaA, Darmstadt |

| | | |
|---|---|---|
| * (TiO₂-Glimmerpigment der Teilchengröße 10-60 µm) | | |

### d) Brause-Bonbons

### Rohware: Brause-Bonbons, weiß

Die Brausebonbons werden mit einer Candurin®/Schellacklösung besprüht, bis der gewünschte Farbauftrag erreicht ist. Eine nachträgliche Trocknung mit Kaltluft ist möglich.

| Sprühlösung: | | |
|---|---|---|
| alkoholische Schellacklösung | 94 % | Fa. Kaul |
| Candurin® Silver Sparkle* | 6 % | Fa. Merck KGaA, Darmstadt |

| | | |
|---|---|---|
| * (TiO₂-Glimmerpigment der Teilchengröße 20-150 µm) | | |

## Patentansprüche

1. Verwendung von 0,005 bis 15 Gew. % an Titandioxid- und/oder Eisenoxid-Pigmenten auf Basis plättchenförmiger Substrate zur Einfärbung von Lebensmittel - oder Pharmaerzeugnissen, **dadurch gekennzeichnet, daß** das plättchenförmige Substrat ein Glimmer-, Al₂O₃-, TiO₂- oder SiO₂-Plättchen ist.

2. Verwendung von Titandioxid- und/oder Eisenoxid-Pigmenten nach Anspruch 1, **dadurch gekennzeichnet, daß** das Eisenoxidpigment ein mit Fe₂O₃ oder Fe₃O₄ beschichtetes plättchenförmiges Substrat ist.

3. Verwendung von Titandioxid- und/oder Eisenoxid-Pigmenten nach Anspruch 1 oder 2, **dadurch gekennzeichnet, daß** das Titandioxid-Pigment und das Eisenoxid-Pigment im Verhältnis 1 : 20 bis 20 :1 gemischt werden können.

4. Verwendung von Titandioxid- und/oder Eisenoxid-Pigmenten nach einem der Ansprüche 1 bis 3, **dadurch gekennzeichnet, daß** Titandioxid- und/oder Eisenoxid-Pigmente in Kombination mit ein oder mehreren Perlglanzpigmenten, beschichteten oder unbeschichteten TiO₂-Plättchen, SiO₂-Plättchen, natürlichen bzw. naturidentischen Färbemitteln, Farbpigmenten oder natürlichen Pflanzen- oder Fruchtextrakten eingesetzt werden.

5. Verwendung von Titandioxid- und/oder Eisenoxid-Pigmenten auf Basis plättchenförmiger Substrate zur Einfärbung von Lebensmittel- oder Pharmaerzeugnissen nach einem der Ansprüche 1 bis 4, **dadurch gekennzeichnet, daß** die Titandioxid- und/oder Eisenoxid-Pigmente in Kombination mit ein oder mehreren Perlglanzpigmenten basierend auf Glimmer beschichtet mit TiO₂, Fe₂O₃ oder einem TiO₂/Fe₂O₃-Gemisch eingesetzt werden.

6. Verwendung von Titandioxid- und/oder Eisenoxid-Pigmenten nach Anspruch 4 oder 5, **dadurch gekennzeichnet, daß** das Eisenoxidpigment ein mit Fe₃O₄ beschichtetes Glimmer-, SiO₂- oder TiO₂-Plättchen ist.

7. Verwendung von Titandioxid- und/oder Eisenoxid-Pigmenten nach einem der Ansprüche 1 bis 6, **dadurch gekennzeichnet, daß** das Lebensmittel- oder Pharmaerzeugnis mit einem Überzug aus Schellack, Ölen, Wachsen, Gummi Arabicum, Cellulosearten, Polymethacrylaten oder Zuckerguß enthaltend Titandioxid- und/oder Eisenoxid-Pigmente und gegebenenfalls weiteren Pigmenten und/oder Färbemitteln versehen ist.

8. Verfahren zur Herstellung von mit Titandioxid- und/oder Eisenoxid-Pigmenten eingefärbten Lebensmittel- und Pharmaerzeugnissen, **dadurch gekennzeichnet, daß** das Titandioxid- und/oder Eisenoxid-Pigment auf Basis plättchenförmiger Substrate nach einem der Ansprüche 1 bis 7 allein oder in Kombination mit weiteren Pigmenten oder Färbemitteln in den gewünschten Mengenverhältnissen, gleichzeitig oder nacheinander, während oder nach ihrer Herstellung dem einzufärbenden Erzeugnis zugegeben wird.

9. Lebensmittel- und Pharmaerzeugnisse enthaltend Titandioxid- und/oder Eisenoxid-Pigmente auf Basis plättchenförmiger Substrate nach einem der Ansprüche 1 bis 7 als Färbemittel.

10. Verwendung von Titandioxid- und/oder Eisenoxid-Pigmenten nach Anspruch 7, **dadurch gekennzeichnet, dass** das Lebensmittel- oder Pharmaerzeugnis mit einem Überzug aus Hydroxypropylmethylcellulose (HPMC) versehen ist.

11. Verwendung von Titandioxid- und/oder Eisenoxid-Pigmenten nach einem der Ansprüche 1 bis 6 zur Einfärbung von Lebensmittel- oder Pharmaerzeugnissen, **dadurch gekennzeichnet, dass** es sich bei den Lebensmittel- und Pharmaerzeugnissen um Tabletten, Gelatinekapseln, Dragees, Salben oder Hustensaft handelt.

12. Verwendung von Titandioxid- und/oder Eisenoxid-Pigmenten nach einem der Ansprüche 1 bis 6 zur Einfärbung von Lebensmittel- oder Pharmaerzeugnisse, **dadurch gekennzeichnet, dass** die Titandioxid- und Eisenoxidpigmente in Kombination mit Aromastoffen und/oder Süßstoffen eingesetzt werden.

13. Verwendung von Titandioxid- und/oder Eisenoxid-Pigmenten nach einem der Ansprüche 1 bis 6 zur Einfärbung von Lebensmittel- oder Pharmaerzeugnissen, **dadurch gekennzeichnet, dass** die Titandioxid- und Eisenoxidpigmente in Kombination mit weiteren Pigmenten/Pigmentgemischen oder Farbstoffen als Färbemittel eingesetzt werden.

14. Verwendung von Titandioxid- und/oder Eisenoxid-Pigmenten nach Anspruch 14, **dadurch gekennzeichnet, dass** es sich bei den Farbstoffen um natürliche oder naturidentische Farbstoffe handelt.

## Claims

1. Use of from 0.005 to 15% by weight of titanium-dioxide and/or iron-oxide pigments based on flake-form substrates for the colouring of food or pharmaceutical products, **characterised in that** the flake-form substrate is a mica, Al₂O₃, TiO₂ or SiO₂ flake.

2. Use of titanium-dioxide and/or iron-oxide pigments according to Claim 1, **characterised in that** the iron-oxide pigment is an Fe₂O₃- or Fe₃O₄- coated flake-form substrate.

3. Use of titanium-dioxide and/or iron-oxide pigments according to Claim 1 or 2, **characterised in that** the titanium-dioxide pigment and the iron-oxide pigment can be mixed in the ratio from 1:20 to 20:1.

4. Use of titanium-dioxide and/or iron-oxide pigments according to one of Claims 1 to 3, **characterised in that** titanium-dioxide and/or iron-oxide pigments are employed in combination with one or more pearlescent pigments, coated or uncoated TiO₂ flakes, SiO₂ flakes, natural or nature-identical colorants, coloured pigments or natural vegetable or fruit extracts.

5. Use of titanium-dioxide and/or iron-oxide pigments based on flake-form substrates for the colouring of food or pharmaceutical products according to one of Claims 1 to 4, **characterised in that** the titanium-dioxide and/or iron-oxide pigments are employed in combination with one or more pearlescent pigments based on mica coated with TiO₂, Fe₂O₃ or a TiO₂/Fe₂O₃ mixture.

6. Use of titanium-dioxide and/or iron-oxide pigments according to Claim 4 or 5, **characterised in that** the iron-oxide pigment is an Fe₃O₄-coated mica, SiO₂ or TiO₂ flake.

7. Use of titanium-dioxide and/or iron-oxide pigments according to one of Claims 1 to 6, **characterised in that** the food or pharmaceutical product is provided with a coating of shellac, oils, waxes, gum arabic, cellulose materials, polymethacrylates or sugar icing comprising titanium-dioxide and/or iron-oxide pigments and optionally further pigments and/or colorants.

8. Process for the production of food and pharmaceutical products coloured using titanium-dioxide and/or iron-oxide pigments, **characterised in that** the titanium-dioxide and/or iron-oxide pigment based on flake-form substrates according to one of Claims 1 to 7, alone or in combination with further pigments or colorants, in the desired mixing ratios, is added simultaneously or successively, during or after the preparation thereof, to the product to be coloured.

9. Food and pharmaceutical products comprising titanium-dioxide and/or iron-oxide pigments based on flake-form substrates according to one of Claims 1 to 7 as colorants.

10. Use of titanium-dioxide and/or iron-oxide pigments according to Claim 7, **characterised in that** the food or pharmaceutical product is provided with a coating of hydroxypropylmethylcellulose (HPMC).

11. Use of titanium-dioxide and/or iron-oxide pigments according to one of Claims 1 to 6 for the colouring of food or pharmaceutical products, **characterised in that** the food and pharmaceutical products are tablets, gelatine capsules, coated tablets, ointments or cough mixture.

12. Use of titanium-dioxide and/or iron-oxide pigments according to one of Claims 1 to 6 for the colouring of food or pharmaceutical products, **characterised in that** the titanium-dioxide and iron-oxide pigments are employed in combination with aromas and/or sweeteners.

13. Use of titanium-dioxide and/or iron-oxide pigments according to one of Claims 1 to 6 for the colouring of food or pharmaceutical products, **characterised in that** the titanium-dioxide and iron-oxide pigments are employed in combination with further pigments/pigment mixtures or dyes as colorants.

14. Use of titanium-dioxide and/or iron-oxide pigments according to Claim 14, **characterised in that** the dyes are natural or nature-identical dyes.

## Revendications

1. Utilisation de 0,005 à 15 % en poids de pigments de dioxyde de titane et/ou d'oxyde de fer à base de substrats plaquettaires pour la coloration de produits alimentaires ou pharmaceutiques, **caractérisée en ce que** le substrat plaquettaire est constitué de plaquettes de mica, de Al₂O₃, de TiO₂ ou de SiO₂.

2. Utilisation de pigments de dioxyde de titane et/ou d'oxyde de fer selon la revendication 1, **caractérisée en ce que** le pigment d'oxyde de fer est un substrat plaquettaire enduit de Fe₂O₃ ou Fe₃O₄.

3. Utilisation de pigments de dioxyde de titane et/ou d'oxyde de fer selon la revendication 1 ou 2, **caractérisée en ce que** le pigment de dioxyde de titane et le pigment d'oxyde de fer peuvent être mélangés selon un rapport de 1:20 à 20:1.

4. Utilisation de pigments de dioxyde de titane et/ou d'oxyde de fer selon l'une quelconque des revendications 1 à 3, **caractérisée en ce que** les pigments de dioxyde de titane et/ou d'oxyde de fer peuvent être utilisés en combinaison avec un ou plusieurs pigments à reflets nacrés, des plaquettes de TiO₂ enduites ou non enduites, des plaquettes de SiO₂, des colorants naturels ou artificiels, des pigments colorants ou des extraits de plantes ou de fruits naturels.

5. Utilisation de pigments de dioxyde de titane et/ou d'oxyde de fer à base de substrats plaquettaires pour la coloration de produits alimentaires ou pharmaceutiques selon l'une quelconque des revendications 1 à 4, **caractérisée en ce que** les pigments de dioxyde de titane et/ou d'oxyde de fer peuvent être utilisés en combinaison avec un ou plusieurs pigments à reflets nacrés à base de mica enduits de TiO₂, de Fe₂O₃ ou d'un mélange de TiO₂/Fe₂O₃.

6. Utilisation de pigments de dioxyde de titane et/ou d'oxyde de fer selon la revendication 4 ou 5, **caractérisée en ce que** le pigment d'oxyde de fer est une plaquette de mica, de SiO₂, ou de TiO₂ enduite de Fe₃O₄.

7. Utilisation de pigments de dioxyde de titane et/ou d'oxyde de fer selon l'une quelconque des revendications 1 à 6, **caractérisée en ce que** le produit alimentaire ou le produit pharmaceutique comprend un enrobage de gomme laque, d'huiles, de cires, de gomme arabique, de types de cellulose, de polyméthacrylates ou de sucre contenant des pigments de dioxyde de titane et/ou d'oxyde de fer et éventuellement, d'autres pigments et/ou colorants.

8. Procédé de production de produits alimentaires ou pharmaceutiques colorés par des pigments de dioxyde de titane et/ou d'oxyde de fer, **caractérisé en ce que** le pigment de dioxyde de titane et/ou le pigment d'oxyde de fer à base de substrats plaquettaires selon l'une quelconque des revendications 1 à 7 est ajouté au produit à colorer, seul ou en combinaison avec d'autres pigments ou colorants dans les rapports de quantité souhaités, de manière concomitante ou l'un après l'autre, pendant ou après la production de ces produits.

9. Produits alimentaires ou pharmaceutiques contenant comme colorant des pigments de dioxyde de titane et/ou d'oxyde de fer à base de substrats plaquettaires selon l'une quelconque des revendications 1 à 7.

10. Utilisation de pigments de dioxyde de titane et/ou d'oxyde de fer selon la revendication 7, **caractérisée en ce que** le produit alimentaire ou pharmaceutique est enrobé d'une couche d'hydroxypropylméthylcellulose (HPMC).

11. Utilisation de pigments de dioxyde de titane et/ou d'oxyde de fer selon l'une quelconque des revendications 1 à 6, pour la coloration de produits alimentaires ou pharmaceutiques, **caractérisée en ce que** les produits alimentaires et pharmaceutiques sont des comprimés, des gélules de gélatine, des dragées, des pommades ou un sirop contre la toux.

12. Utilisation de pigments de dioxyde de titane et/ou d'oxyde de fer selon l'une quelconque des revendications 1 à 6, pour la coloration de produits alimentaires ou pharmaceutiques, **caractérisée en ce que** les pigments de dioxyde de titane et d'oxyde de fer sont utilisés en combinaison avec des arômes et/ou des édulcorants.

13. Utilisation de pigments de dioxyde de titane et/ou d'oxyde de fer selon l'une quelconque des revendications 1 à 6, pour la coloration de produits alimentaires ou pharmaceutiques, **caractérisée en ce que** les pigments de dioxyde de titane et d'oxyde de fer sont utilisés comme colorants en combinaison avec d'autres pigments/mélanges de pigments ou d'autres substances colorantes.

14. Utilisation de pigments de dioxyde de titane et/ou d'oxyde de fer selon la revendication 4, **caractérisée en ce que** les substances colorantes sont des colorants naturels ou artificiels.
